# EUROPEAN PATENT SPECIFICATION

(11) **EP 1 189 015 B1**
(45) Date of publication and mention of the grant of the patent: **18.10.2006**
(21) Application number: 01119223.4
(22) Date of filing: 09.08.2001
(51) Int. Cl.: G01B 7/16, G01B 11/16, G01B 21/32

(54) **Rotary shaft axial elongation measuring method and device**
Verfahren und Vorrichtung zur Messung der axialen Dehnung von rotierenden Wellen
Procédé et appareil pour mesurer l'extension axiale d'un arbre tournant

(30) Priority: 18.09.2000 JP 2000281826
(43) Date of publication of application: 20.03.2002
(73) Proprietor: MITSUBISHI HEAVY INDUSTRIES, LTD., Tokyo (JP)
(72) Inventor: Kondo, Mitsuru, Mitsubishi Heavy Industries, Ltd., 2-chome,Arai-cho, Takasago-shi,Hyogo-ken (JP); Hirokawa,Kazuharu, Mitsubishi Heavy Industries Ltd, Arai-cho, Takasago-shi,Hyogo-ken (JP)
(74) Representative: Henkel, Feiler & Hänzel

(56) References cited:
- DE-A- 3 908 248
- DE-A- 19 609 320
- PATENT ABSTRACTS OF JAPAN vol. 011, no. 002 (P-532), 6 January 1987 (1987-01-06) -& JP 61 181904 A (HITACHI LTD), 14 August 1986 (1986-08-14)
- PATENT ABSTRACTS OF JAPAN vol. 013, no. 152 (P-856), 13 April 1989 (1989-04-13) & JP 63 313007 A (NATL AEROSPACE LAB), 21 December 1988 (1988-12-21)
- PATENT ABSTRACTS OF JAPAN vol. 008, no. 101 (P-273), 12 May 1984 (1984-05-12) & JP 59 013906 A (MITSUI TOATSU KAGAKU KK), 24 January 1984 (1984-01-24)
- PATENT ABSTRACTS OF JAPAN vol. 011, no. 230 (P-599), 28 July 1987 (1987-07-28) & JP 62 044603 A (S G:KK), 26 February 1987 (1987-02-26)

## Description

### BACKGROUND OF THE INVENTION

### Field of the Invention

The present invention relates to a rotary shaft axial elongation measuring method and a device therefor, such as for a gas turbine or steam turbine rotor shaft, that elongates in the axial direction.

### Description of the Prior Art

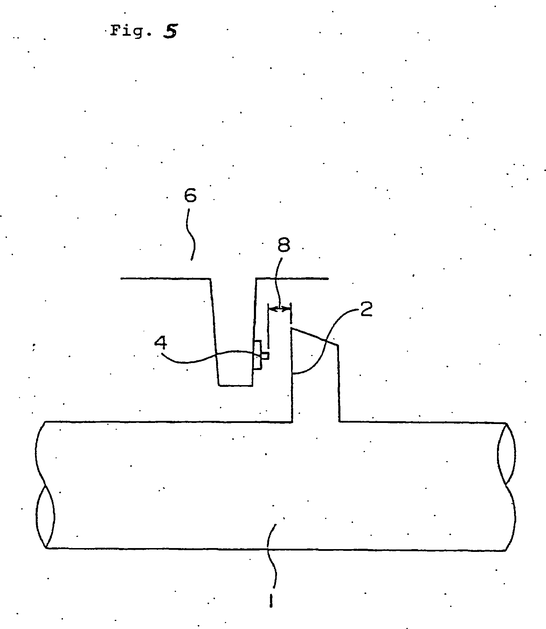

As a rotor shaft of a gas turbine or steam turbine causes an axial elongation according to temperature change, it is necessary to accurately monitor whether the elongation is within a predetermined range or not so that no mutual contact of a moving blade and a stationary blade may be caused. One example of the prior art to measure the axial elongation of a rotary shaft with such an object is to use a gap sensor to detect a gap caused by the axial elongation, as shown in Fig. 5.

In Fig. 5, numeral 1 designates a rotary shaft and this rotary shaft 1 is provided with a target face 2 for measuring the axial elongation. A gap sensor 4 is arranged so as to oppose the target face 2. The gap sensor 4 is fitted to a stationary part 6. The gap sensor 4 measures a gap 8 between the target face 2 and the sensor 4 and, by the change of this gap 8, the axial elongation of the rotary shaft 1 is measured.

In the prior art axial elongation measuring device as mentioned above, the elongation of the rotary shaft 1 is directly measured by the gap sensor 4 relative to the stationary part 6. Therefore, in case the axial elongation of the rotary shaft 1 is large, it is necessary to measure the gap 8 over a wide range, but to measure the gap 8 by the gap sensor 4 over the wide range often results in the less accuracy.

Also, as the gap sensor 4 is provided in the axial directional space around the rotary shaft 1 where the gap 8 to be measured exists, a certain space is required in the axial direction of the rotary shaft 1 for installing the gap sensor 4.

DE 39 08 248 A discloses a method and device for measuring an axial elongation of a rotary shaft in which a first mark is provided at the outer peripheral surface of the rotary shaft so as to extend parallel to the rotational axis and a second mark is arranged in an inclined angle thereto. A sensor is provided opposed to the surface of the rotary shaft so as to detect the passing of the marks upon rotation of the shaft. The detection signals are used as start and stop signals for a time measuring device in order to detect the interval between the signals representing the passing of the first and second marks. In order to determine the axial elongation of the shaft a ratio of the interval between two consecutive detections of the same mark and the interval between the detections of consecutive marks are used.

JP 63313007 A (Abstract) discloses another method and device for measuring the axial elongation of a rotary shaft in which similar marks are used on the outer peripheral surface of the rotary shaft. In addition, two sensors are provided to respectively detect the passing of one of the marks and the elongation quantity of the shaft is calculated from the time difference from a measurement time interval determined by the signal from the sensor sensing the reference mark extending in the axial direction and the measurement time interval determined by the signal from the second sensor sensing the inclined mark.

### SUMMARY OF THE INVENTION

In view of the mentioned problems in the prior art rotary shaft axial elongation measuring device, it is an object of the present invention to provide a rotary shaft axial elongation measuring method and a device therefor that are free from such problems as mentioned above and are able to measure an axial elongation of a rotary shaft with a high accuracy regardless of sizes of the axial elongation.

As a rotary shaft axial elongation measuring method for solving the mentioned problems, the present invention provides a rotary shaft axial elongation measuring method for measuring an axial elongation of a rotary shaft as defined in claim 1 and a corresponding measuring device as defined in claim 2.

According to the axial elongation measuring method of the present invention, as the reference and measuring marks are provided inclinedly relative to the axial direction of the rotary shaft, the circumferential directional position of the measuring mark line relative to the position of the reference mark line changes according to the axial directional position thereof. On the other hand, the sensor generates the pulses when the reference mark and the measuring mark pass by the sensor following the rotation of the rotary shaft and hence, if the axial directional position of the rotary shaft opposing the sensor changes due to the axial elongation of the rotary shaft, then the interval of the pulses generated by the sensor differs. Consequently, by measuring the change in the interval of the pulses generated by the sensor, the axial elongation of the rotary shaft can be measured.

In the mentioned axial elongation measuring method of the present invention, the steps are simplified such that the reference mark, and the measuring mark arranged inclinedly relative to the axial direction of the rotary shaft, are provided on the rotational surface of the rotary shaft, the axial elongation of which is to be measured, and the sensor is arranged fixedly so as to oppose the rotational surface of the rotary shaft for generating pulses upon passing by of the mentioned marks following the rotation of the rotary shaft. Hence, the gap between the sensor and the rotational surface of the rotary shaft opposing the sensor does not change substantially by the axial elongation of the rotary shaft and the accuracy of measuring the axial elongation by the sensor is in no case reduced by the sizes of the axial elongation. Also, according to the method of the present invention, there is no need to install such a sensor and a target face as in the prior art case in the axial directional space around the rotary shaft and thus there occurs no case where the measuring becomes impossible due to a limitation in the axial directional space of the rotary shaft.

According to the rotary shaft axial elongation measuring device of the present invention, such a device is provided as is able to measure the axial elongation of the rotary shaft based on the axial elongation measuring method of the present invention as mentioned above.

In the axial elongation measuring device of the present invention, as the construction is made such that the axial elongation data is obtained by the sensor arranged fixedly so as to oppose the rotational surface of the rotary shaft, the gap between the sensor and the rotational surface is constant regardless of sizes of the axial elongation of the rotary shaft and measuring of the axial elongation with a high accuracy can be performed.

Also, in the axial elongation measuring device of the present invention, as the sensor may be arranged with a predetermined gap being maintained between itself and the rotational surface of the rotary shaft, only a narrow space is required for measuring the axial elongation regardless of sizes of the axial elongation.

The reference mark and the measuring mark provided on the rotational surface of the rotary shaft in the axial elongation measuring device of the present invention may be two marks provided such that an interval between them in the circumferential direction of the rotary shaft differs according to the axial directional position of the rotary shaft. These two marks may be two grooves or two wire members both provided in a turned V shape.

Also, the measuring mark used in the axial elongation measuring device of the present invention may be a groove or a wire member both provided in a spiral shape on the rotational surface of the rotary shaft.

As mentioned above, the axial elongation measuring device of the present invention may be of a simple construction that is made easily and less costly.

The sensor used in the axial elongation measuring method and device of the present invention may be an ordinary gap sensor, such as a capacitance type gap sensor or eddy current gap sensor, or may be a photoelectric sensor that generates a pulse signal upon passing of a mark provided on the rotational surface.

According to the present invention as described above, even in the case where the rotary shaft affords no space for measuring by the conventional art to thereby make the measuring of the axial elongation impossible, the measuring device that can be easily installed for enabling the measuring of the axial elongation is provided.

### BRIEF DESCRIPTION OF THE DRAWINGS

Figs. 1(a) and 1(b) show a rotary shaft used in an embodiment according to the present invention, wherein Fig. 1(a) is a side view and Fig. 1(b) is a front view.
Figs. 2(a) and 2(b) are explanatory views showing the state where pulses generated by a sensor upon rotation of the rotary shaft of Figs. 1(a) and 1(b) change from Fig. 2(a) to Fig. 2(b) by an axial elongation.
Fig. 3 is a block diagram showing an entire construction of an axial elongation measuring device of the embodiment according to the present invention.
Fig. 4 is an explanatory view showing the relation between an accuracy of the axial elongation measuring by the present invention and that by the prior art.
Fig. 5 is a side view showing a construction of a prior art axial elongation measuring device.

### DESCRIPTION OF THE PREFERRED EMBODIMENTS

Herebelow, a rotary shaft axial elongation measuring device of the present invention will be concretely described based on an embodiment as illustrated.

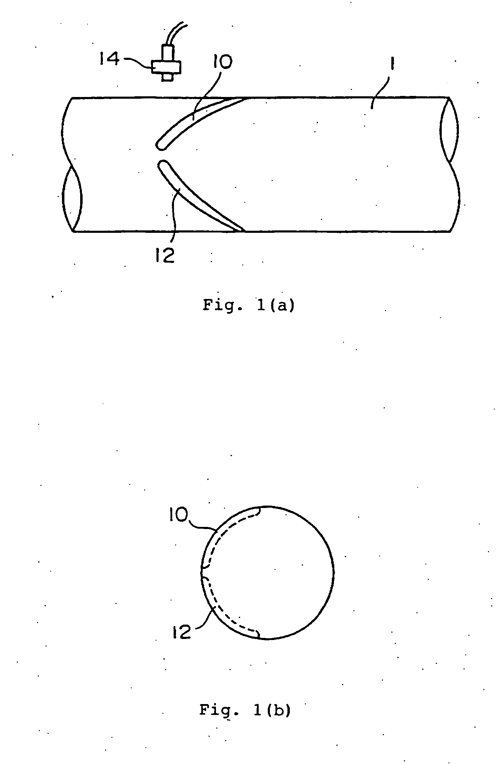

An embodiment according to the present invention will be described with reference to Figs. 1 to 4. In Figs. 1(a) and 1(b), numerals 10 and 12, respectively, designate grooves, that are provided in a rotational outer circumferential surface of a rotary shaft 1 so as to oppose one another inclinedly in a turned V shape. Thus, the grooves 10, 12, opposing one another, extend inclinedly in an axial direction of the rotary shaft 1 and an interval between the grooves 10, 12 changes according to the axial directional position thereof, so that a construction is made such that one of the grooves 10, 12 constitutes a reference mark as hereinafter referred to and the other constitutes a measuring mark as hereinafter referred to.

Numeral 14 designates a sensor, that is arranged so as to oppose the rotational outer circumferential surface of the rotary shaft 1. This sensor 14 may be a sensor, such as a capacitance type gap sensor, eddy current gap sensor or photoelectric sensor, that generates a pulse or pulse signal according to a change in a capacitance, eddy current or reflection of light following a change in a gap between the sensor 14 and the rotational outer circumferential surface of the rotary shaft 1 when the grooves 10, 12 pass by the sensor 14 by the rotation of the rotary shaft 1.

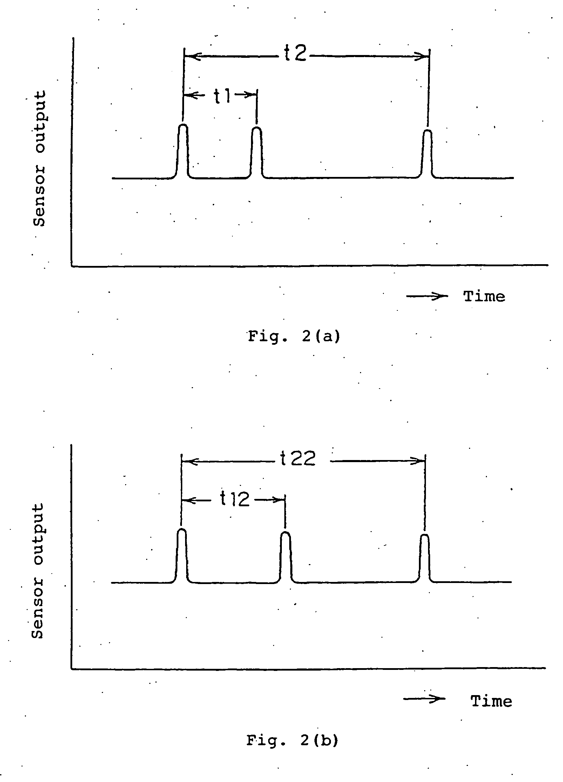

In the measuring device of Figs. 1(a) and 1(b) constructed as above, if the rotary shaft 1 rotates, the grooves 10, 12 pass by the sensor 14 and the sensor 14 puts out pulses, as shown in Figs. 2(a) and 2(b), corresponding to time t1 that is a time from passing by the sensor 14 of the groove 10 to that of the groove 12 and time t2 that is a time of one rotation of the rotary shaft 1.

As the position of the sensor 14 is fixed, if the rotary shaft 1 elongates in the axial direction and the axial directional position of the grooves 10, 12 changes, then the circumferential directional interval between the grooves 10, 12 at the position of the sensor 14 changes. Hence, by the axial elongation of the rotary shaft 1, the pulses generated by the sensor 14 change as shown in Fig. 2(b), so that the pulses change from those having a pulse interval ratio of t1/t2 in Fig. 2(a) to those having a different pulse interval ratio of t12/t22 in Fig. 2(b).

Thus, by measuring the change in the pulse interval ratio t1/t2 obtained by the sensor 14, the axial elongation of the rotary shaft 1 can be measured.

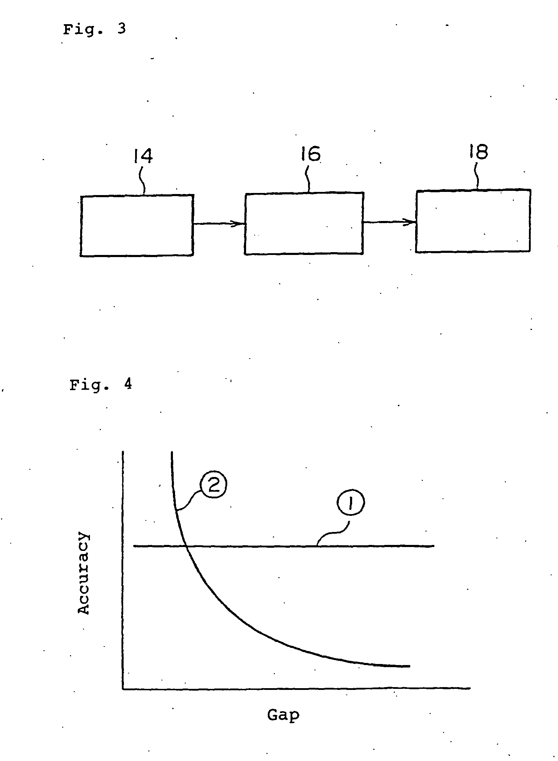

Fig. 3 is a block diagram showing an entire construction of the axial elongation measuring device, wherein the pulse interval ratio of the pulses detected by the sensor 14 is sent to a data processing part 16 and the axial elongation obtained at the data processing part 16 is displayed at a display part 18.

The grooves 10, 12 of the rotary shaft 1 may be provided in the outer circumferential surface of the rotary shaft 1 within the range of 1/2 or less of the entire outer circumference as shown in Fig. 1(b) and then, if the ratio t1/t2 is more than 0.5 (t1/t2>0.5), the axial elongation and the ratio t1/t2 can be decided correspondingly as (1-t1/t2) and thereby the data processing can be simplified.

According to the means to measure the interval changes of the marks provided in the rotational outer circumferential surface of the rotary shaft 1 by the sensor 14 arranged oppositely to this rotational surface as described above, as the gap between the sensor 14 and the rotational surface as the object to be measured is constant regardless of the axial elongation, the measuring accuracy can be maintained constant. This is shown by Fig. 4, wherein ① shows the accuracy of the present invention and ② shows the state where the measuring accuracy becomes lower as the gap between the sensor and the object to be measured becomes larger by the axial elongation as in the case shown in Fig. 5.

It is to be noted that, while the present invention has been concretely described based on the embodiment as illustrated, the present invention is not limited to this embodiment but, needless to mention, may be added with various modifications in the concrete structure and construction thereof as come within the scope of the claims as appended.

For example, while in the above embodiment, the grooves are formed as the reference mark and the measuring mark provided on the rotational surface of the rotary shaft 1, a wire member, such as a wire made of aluminum or stainless steel, may be fitted instead as a mark by spot welding or the like so as to form a projection on the rotational surface.

## Claims

1. A rotary shaft axial elongation measuring method for measuring an axial elongation of a rotary shaft, comprising the steps of:
providing a reference mark (10) and a measuring mark (12) on a rotational surface of said rotary shaft (1) such that said reference mark (10) and said measuring mark (12) oppose each other, extend inclinedly in an axial direction of said rotary shaft (1), and such that an interval between said marks (10,12) changes according to the axial directional position thereof;
arranging a sensor (14) fixedly so as to oppose the rotational surface of said rotary shaft (1), said sensor (14) generating pulses upon passing of said marks (10,12) following a rotation of said rotary shaft (1); and
measuring the axial elongation of said rotary shaft (1) from a change in ratio between an interval (t1, t12) of the pulses generated by said sensor (14) upon passing of said reference mark (10) and measuring mark (10) and an interval (t2,t22) of the pulses representing one rotation of the rotary shaft (1).

2. A rotary shaft axial elongation measuring device for measuring an axial elongation of a rotary shaft, comprising:
said shaft (1) having a reference mark (10) and a measuring mark (12) provided on a rotational surface of said rotary shaft (1), said reference mark (10) and said measuring mark (12) being arranged such that said reference mark (10) and said measuring mark (12) oppose each other, extend inclinedly in an axial direction of said rotary shaft (1)and such that an interval between said marks (10,12) changes according to the axial directional position thereof;
a sensor (14) arranged fixedly so as to oppose the rotational surface of said rotary shaft (1), said sensor (14) generating pulses upon passing of said marks (10,12) following a rotation of said rotary shaft (1); and
a data processing part (16) arranged for measuring the axial elongation of said rotary shaft (1) from a change in ratio between an interval (t1, t12) of the pulses generated by said sensor (14) upon passing of said reference mark (10) and measuring mark (10) and an interval (t2,t22) of the pulses representing one rotation of the rotary shaft (1).

3. A rotary shaft axial elongation measuring device as claimed in claim 2, wherein said two marks are two grooves (10,12).

4. A rotary shaft axial elongation measuring device as claimed in claim 2, wherein said two marks are two wire members.

5. A rotary shaft axial elongation measuring device as claimed in anyone of claims 2 to 4, wherein said sensor (14) is anyone of a capacitance type gap sensor, an eddy current gap sensor and a photoelectric sensor.

## Patentansprüche

1. Drehwellen-Axialdehnungs-Messverfahren zum Messen einer axialen Dehnung einer Drehwelle, mit den folgenden Schritten:
Vorsehen einer Bezugsmarke (10) und einer Messmarke (12) auf einer Drehfläche der Drehwelle (1) derart, dass die Bezugsmarke (10) und die Messmarke (12) einander gegenüberliegen und sich schräg in einer Axialrichtung der Drehwelle (1) und derart erstrecken, dass sich ein Intervall zwischen den Marken (10,12) entsprechend der Axialrichtungsposition derselben ändert,
feststehendes Anordnen eines Sensors (14) derart, dass er der Drehfläche der Drehwelle (1) gegenüberliegt, wobei der Sensor (14) beim Passieren der Marken (10,12) beieiner Drehung der Drehwelle (1) Impulse erzeugt, und
Messen der axialen Dehnung der Drehwelle (1) aus einer Änderung in dem Verhältnis zwischen einem Intervall (t1, t12), der von dem Sensor (14) beim Passieren der Bezugsmarke (10) und der Messmarke (12) erzeugten Impulse und einem Intervall (t2,t22) der eine Umdrehung der Drehwelle (1) darstellenden Impulse.

2. Drehwellen-Axialdehnungs-Messvorrichtung zum Messen einer axialen Dehnung einer Drehwelle, umfassend:
die Welle (1) mit einer Bezugsmarke (10) und einer Messmarke (12), die auf einer Drehfläche der Drehwelle (1) vorgesehen sind, wobei die Bezugsmarke (10) und die Messmarke (12) so angeordnet sind, dass die Bezugsmarke (10) und die Messmarke (12) einander gegenüberliegen, sich schräg in einer Axialrichtung der Drehwelle (1) erstrecken und sich so erstrecken, dass sichein Intervall zwischen den Marken (10,12) entsprechend deren Axialrichtungsposition ändert,
einen Sensor (14), der feststehend so angeordnet ist, dass er der Drehfläche der Drehwelle (1) gegenüberliegt, wobei der Sensor (14) beim Passieren der Marken (10,12) bei einer Drehung der Drehwelle (1) Impulse erzeugt, und
einen Datenverarbeitungsteil (16), der zum Messen der axialen Dehnung der Drehwelle (1) aus einer Änderung im Verhältnis zwischen einem Intervall (t1, t12) der von dem Sensor (14) beim Passieren der Bezugsmarke (10) und der Messmarke (12) erzeugten Impulse und einem Intervall (t2,t22) der eine Umdrehung der Drehwelle (1) darstellenden Impulse vorgesehen ist.

3. Drehwellen-Axialdehnungs-Messvorrichtung nach Anspruch 2, wobei die zwei Marken zwei Nuten bzw. Rillen (10,12) sind.

4. Drehwellen-Axialdehnungs-Messvorrichtung nach Anspruch 2, wobei die zwei Marken zwei Drahtelemente sind.

5. Drehwellen-Axialdehnungs-Messvorrichtung nach einem der Ansprüche 2 bis 4, wobei der Sensor (14) ein Kapazitäts-Spaltsensor, ein Wirbelstrom-Spaltsensor oder ein photoelektrischer Sensor ist.

## Revendications

1. Procédé de mesure de l'allongement axial d'un arbre tournant comprenant les stades dans lesquels:
on ménage un repère (10) de référence et un repère (12) de mesure sur une surface de rotation de l'arbre (1) tournant de façon à ce que le repère (10) de référence et le repère (12) de mesure soient opposés l'un à l'autre, s'étendent de manière inclinée dans une direction axiale de l'arbre (1) tournant, et
de manière à ce qu'un intervalle entre les repères (10,12) change en fonction de leur position en direction axiale;
on dispose un capteur (14) de manière fixe de manière à ce qu'il soit en opposition à la surface de rotation de l'arbre (1) tournant, le capteur (14) engendrant des impulsions lors du passage sur les repères (10,12), faisant suite à une rotation de l'arbre (1) tournant;
on mesure l'allongement axial de l'arbre (1) tournant à partir d'une variation du rapport entre un intervalle (t1, t12)des impulsions engendrées par le capteur (14) après avoir passé sur le repère (10) de référence et le repère (12) de mesure et
un intervalle (t2, t22) des impulsions représentant une rotation de l'arbre (1) tournant.

2. Dispositif de mesure de l'allongement axial de l'arbre tournant, comprenant:
l'arbre (1)ayant un repère (10) de référence et un repère (12) de mesure prévus sur une surface de rotation de l'arbre (1) tournant, le repère (10) de référence et le repère (12) de mesure étant disposés de manière à ce que le repère (10) de référence et le repère (12) de mesure soient en opposition l'un à l'autre, s'étendent de manière inclinée et de manière à ce que l'intervalle entre les repères (10, 12) change en fonction de leur position en direction axiale,
un capteur (14) disposé de manière fixe de manière à ce qu'il soit en opposition à la surface de rotation de l'arbre (1) tournant, le capteur (14) engendrant des impulsions lors du passage sur les repères (10,12), faisant suite à une rotation de l'arbre (1) tournant; et
une partie (16) de traitement de données, conçue pour mesurer l'allongement axial de l'arbre(1) tournant à partir d'une variation du rapport entre un intervalle (t1, t12) des impulsions engendrées par le capteur (14) après avoir passé sur le repère (10) de référence et le repère (12) de mesure et
un intervalle (t2, t22) des impulsions représentant une rotation de l'arbre (1) tournant.

3. Dispositif de mesure de l'allongement axial d'un arbre tournant, tel que revendiqué à la revendication 2, dans lequel les deux repères sont deux rainures (10, 12).

4. Dispositif tel que revendiqué à la revendication 2, dans lequel les deux repères sont deux éléments filaires.

5. Dispositif tel que revendiqué aux revendications 2 à 4, dans lequel le capteur (14) est l'un quelconque des capteurs d'intervalle du type capacitif, d'un capteur d'intervalle du type à courant de Foucault et d'un capteur photoélectrique.
